# EUROPEAN PATENT SPECIFICATION

(11) **EP 2 152 970 B1**
(45) Date of publication and mention of the grant of the patent: **15.08.2012**
(21) Application number: 08761713.0
(22) Date of filing: 02.06.2008
(51) Int. Cl.: D21H 19/72, D21H 23/48, B32B 29/06

(54) **A METHOD FOR MANUFACTURING PAPER**
VERFAHREN ZUR PAPIERHERSTELLUNG
PROCÉDÉ SERVANT À FABRIQUER DU PAPIER

(30) Priority: 05.06.2007 FI 20075416
(43) Date of publication of application: 17.02.2010
(73) Proprietor: UPM-Kymmene Corporation, 00130 Helsinki (FI)
(72) Inventor: ÅSMUS, Lars, FI-68600 Pietarsaari (FI); KUNNAS, Leena, FI-53100 Lappeenranta (FI); SINKKO, Tarja, FI-53500 Lappeenranta (FI); PAPPILA, Tuomo, FI-37600 Valkeakoski (FI); OJANEN, Mari, FI-02200 Espoo (FI)
(74) Representative: Pursiainen, Timo Pekka
(86) International application number: PCT/FI2008/050317
(87) International publication number: WO 2008/148934

(56) References cited:
- EP-A1- 1 249 533
- EP-A1- 1 416 087
- WO-A1-01/54828
- WO-A1-91/01407
- WO-A1-2005/095711
- WO-A1-2006/070065
- US-B1- 6 548 120

## Description

The present invention relates to a method for manufacturing paper. The paper can be applied, for example, as industrial paper used in packages or for further converting.

By the method according to the invention, it is possible to manufacture, for example, material for bags or ream wrapping paper. A ream wrapping is a package to protect copying and printing paper. Typically, one ream wrapping contains 500 sheets of A4 size paper. The function of the ream wrapping is, above all, to protect the paper sheets contained in it from external moisture and, on the other hand, to maintain the desired moisture level inside the package. Secondly, the ream wrapping protects the paper from mechanical damage. Thirdly, it advertises a brand, and fourthly, a fine appearance and printing create an image of a product of good quality.

There are several ways to manufacture a ream wrapping. Normally, a ream wrapping consists of base paper, polyethylene coating, printing, and lacquer. Instead of the polyethylene coating, various dispersions and waxes are also used to give the package the desired protection against water vapour in the air. Furthermore, various lacquers, OPP films or other reinforcing materials, such as non-woven fabrics, can be used in the ream wrapping.

Document US 6,548,120 discloses ream wrapping paper which can be recycled and repulped and whose water vapour permeability is 0.8 to 7 g/100 in²/24 h, that is, 12.4 to 108.5 g/m²/24 h. In an advantageous embodiment, the base paper is calendered. A base coating is formed on top of the base paper, and at least one coating layer on top of that, by using generally known coating methods. Both of the above-described layers contain a polymer that has been selected from acrylic polymers, acrylic copolymers, polyvinyl acetate, polyvinyl alcohol, ethylene vinyl acetate, polyvinyl chloride, styrene/butadiene copolymer, polyvinylidene chloride and its copolymers, or starch.

In the method according to the invention, the base paper is first treated to have a surface roughness of 30 to 500 ml/min, and the paper is then coated by a contactless method.

The base paper may contain 0 to 100 wt-%, preferably 30 to 70 wt-% of hardwood pulp. The pulp may be bleached, unbleached, or semi-bleached. Furthermore, the paper may contain 0 to 100 wt-%, preferably 30 to 70 wt-% of softwood pulp. The softwood pulp may also be bleached, unbleached, or semi-bleached. The paper may also contain 0 to 100 wt-%, preferably 30 to 70 wt-%, of bleached, unbleached or semi-bleached refiner sawdust pulp. It is also possible that the paper contains 0 to 100 wt-% of bleached, unbleached or semi-bleached thermomechanical pulp or mechanical pulp. The base paper may contain 0 to 45 wt-% of a filler, such as kaolin or calcium carbonate. The paper may be manufactured so that the pH in the short circulation of the paper machine is 3.5 to 6.0 or 6.0 to 8.7.

One possible composition for the base paper is 40 wt-% of bleached, unbleached or semi-bleached refiner sawdust pulp, 60 wt-% of softwood pulp, and 5 wt-% of filler. In general, said proportions may vary from 30 to 70 wt-% of refiner sawdust pulp, from 30 to 70 wt-% of softwood pulp, and 0 to 45 wt-% of filler.

The paper may be pre-coated with a surface-size press or a corresponding device. The quantity of the pre-coating may range from 0.1 to 20 g/m². In the pre-coating, conventional mineral particles, such as calcium carbonate and/or kaolin, are used. The dry matter content is 15 to 65 wt-%. It is possible that the surface of the paper is treated to be smooth before the pre-coating on one side or on both sides, preferably by calendering.

Before the actual coating, the paper is treated so that its Bendtsen roughness is 30 to 500 ml/min, preferably 100 to 200 ml/min. The PPS roughness may be 1.5 to 2.5 *µ*m, and the Hunter gloss may be 0 to 30%, preferably 20 to 30%.

The method used for measuring the Bendtsen roughness is ISO 8791-2:1990. For determining the PPS roughness and the Hunter gloss, the methods according to ISO 8791-4:1992 and ISO 8254-1:1999 are used, respectively.

The surface of the paper can be brought to the suitable roughness by calendering with a soft calender, a supercalender, a multi-nip calender, or by treating the paper on the surface of an MG cylinder. Preferably, an MG cylinder is used, because for papers treated with the MG cylinder, the best water vapour permeability properties are obtained with the same coating formulae when compared with other methods intended for surface treatment.

When the paper is treated in such a way that the roughness of the surface is reduced, it is treated in contact with a hot surface so that the paper surface is plasticized. The time of treatment in contact with the hot surface is typically 0.7 to 7.0 seconds. The treatment is normally made for one side of the paper only. The density of the treated base paper is normally 600 to 1100 kg/m³, preferably 650 to 850 kg/m³.

As stated above, the treatment of the base paper is preferably made with an MG cylinder, because a very smooth surface is obtained by the treatment of the paper. When the wet web is pressed against the hot, smooth surface, the contact surface of the fibre network of the paper dries to correspond to the smoothness and contour of the hot, smooth surface. MG paper is dimensionally stable, smooth and glossy. Furthermore, the paper has a low density and a high porosity under the treated surface layer when compared with calendered papers of the same smoothness level. Thanks to the treatment, the smooth surface of the paper forms a plane, from which roughness deviations are only found downwards, towards the structure. This is particularly advantageous, because the paper surface has thus no roughness deviations protruding from the surface of the paper, so that the coating layer coming onto the surface of the paper will form an unporous surface; in other words, the paper has no weak points, through which moisture could penetrate.

When the base paper has been treated either with an MG cylinder or in a calender, it is coated. The coating layers are formed so that the method to be used is contactless, such as curtain coating or air brush coating. Preferably, the method is curtain coating.

The paper can be manufactured, *inter alia,* by the following methods:
1) The base paper is calendered or treated with an MG cylinder to a surface roughness level of 30 to 500 ml/min. After this, the base paper is coated with one or more layers by using the curtain coating method.
2) The base paper is pre-coated with a coating substance that contains mineral particles. The pre-coating may be effected by any known method. After the pre-coating, the base paper is calendered or treated with an MG cylinder to a surface roughness level of 30 to 500 ml/min. After this, the paper is coated with one or more layers by using the curtain coating method.

When only one curtain coating layer is used, said layer is a barrier layer that prevents the penetration of water vapour through the paper. The barrier layer normally contains at least one of the substances listed below for use in the barrier layer.

However, it is an advantage of several layers formed by the curtain coating method that a better result in water vapour permeability is achieved with a smaller total coating content than by using a single coating layer formed by the curtain coating method.

For example, in an advantageous embodiment, three coating layers are formed in a single curtain coating procedure so that the layer applied onto the surface of the paper contains mineral particles and adhesive, the middle layer is a barrier layer, and the outermost layer is, again, a layer that contains mineral particles and adhesive. The adhesive may be the same polymeric substance as that used in the barrier layer. The barrier layer may also contain mineral particles, but these are not necessary. Preferably, the substance forming the barrier layer contains styrene/butadiene or a copolymer of ethylene and acrylic acid. An advantageous mineral substance is kaolin.

Curtain coating and other contactless methods have the advantage that the coating layer follows the contour of the base paper; in other words, the thickness of the coating layer remains unaltered, irrespective of whether there are variations of the profile in the surface of the paper or not.

The mineral particles in all the formed layers may comprise talc, kaolin, calcium carbonate, or titanium dioxide. In some cases, it is advantageous that the particles are planar, so that they have a better surface barrier effect.

The substance used in the barrier layer and the adhesive may contain styrene/butadiene, styrene/acrylate, styrene/butadiene/acrylonitril, styrene/acrylate/acrylonitrile, styrene/butadiene/acrylate/acrylonitrile, styrene/malic anhydride, styrene/acrylate/maleic anhydride, polysaccharide, protein, polyvinyl pyrrolidone, polyvinyl alcohol, polyvinyl acetate, ethylene/acrylic acid copolymer, ethylene/vinyl alcohol copolymer, polyurethane, epoxy resin, polyester, polyolefin, carboxymethyl cellulose, silicon, wax, or mixtures of these. Particularly advantageous adhesives include, for example, carboxylated styrene/butadiene, carboxylated styrene/acrylate, carboxylated styrene/maleic anhydride, carboxylated polysaccharides, proteins, polyvinyl alcohol, carboxylated polyvinyl acetate, and mixtures of these.

Examples of polysaccharides include agar, sodium alginate, starch and modified starches, such as thermally modified starches, carboxy methylated starches, hydroxyl ethylated starches, and oxidized starches. Examples of proteins include albumin, soybean protein and casein.

After the coating, the paper can be calendered by known calendering techniques, for example in a soft calender. In the soft calender, the nip pressure may be 10 to 300 kN/m, typically 50 to 150 kN/m, and the temperature of the thermoroll of the calender may be 20 to 200°C, typically 30 to 150°C.

In the following, the invention will be described by means of the drawings and the examples. In the drawings,
- Fig. 1: shows the principle of the MG cylinder, and
- Fig. 2: shows the principle of the curtain coating method.

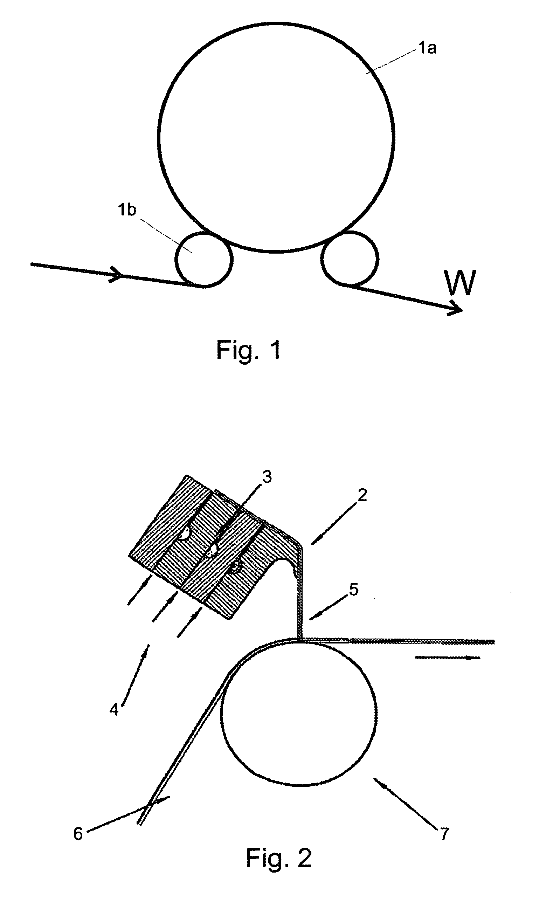

Figure 1 shows the principle of an MG cylinder 1. A paper web W is pressed by a press roll 1 b against the smooth and hot surface of a cylinder 1 a so that the surface of the paper is plasticized and smoothed down.

Figure 2 shows the principle of the curtain coating method. A curtain coating unit 2 comprises a nozzle arrangement 3 for leading several jets 4 as a multilayer curtain 5 onto the surface of the paper 6 to be coated. Before the coating, the direction of travel of the paper 6 is changed by a roll 7 to minimize problems caused by the air interface.

### Example.

Table 1 shows properties of the base papers used in tests.

**Table 1. Base papers used in tests.**

| Property | Base paper 1 | Base paper 2 | Base paper 3 |
|---|---|---|---|
| Grammage (g/m²) | 71.5 | 69.7 | 69.9 |
| Density (g/cm³) | - | 843 | 771 |
| Air permeability | 22.9 s (Gurley) | 71.3 s (Gurley) | 48 ml/min |
| Smoothness front/back (ml/min) | 1730/260 | 182/103 | 676 / 331 |
| Water absorption | 27 g/m² (Cobb) | 27.3 g/m² (ws) | - |

Base paper 1 is MG paper containing filler and softwood sulphate pulp, base paper 2 is white MF paper, and base paper 3 is surface-sized and pre-coated.

The layer that contains mineral particles consists primarily of kaolin and latex, such as styrene/butadiene latex.

The barrier layer may contain styrene/butadiene based latex, an aqueous dispersion of ethylene/acrylic acid copolymer, propylene/ethylene copolymer, polyurethane dispersion, or mixtures of these. In addition to said substances, the barrier layer may contain mineral particles, such as kaolin.

In the tests, three different coating quantities were used:
1) the layer applied onto the base paper 3 g/m², the barrier layer 4 g/m², the outermost layer 7 g/m².
2) the layer applied onto the base paper 3 g/m², the barrier layer 5 g/m², the outermost layer 6 g/m².
3) the layer applied onto the base paper 3 g/m², the barrier layer 6 g/m², the outermost layer 3 g/m².

The coating formulae are given in the tables 2 and 3. The amounts of substances are given in parts in the tables.

The best results were obtained when the adhesive used was an adhesive containing a copolymer of ethylene and acrylic acid. When the adhesive also contained mineral particles, a recyclable product was obtained; in other words, this product has the property of dissolubility in water. Also, the printability properties are good. The best base paper was base paper 1 which contained softwood sulphate pulp and filler. The base paper 1 was treated on an MG cylinder. On the basis of the tests, it was found that with these substances and methods, the grammage of the barrier layer should preferably exceed 4 g/m², it is advantageously 5 to 7 g/m², to achieve the aim of water vapour permeability lower than 10 g/m²/24 h. Water vapour permeability is measured by a method disclosed in ISO 2528:1995; the measuring conditions being T=23°C, RH=50% and t=24h.

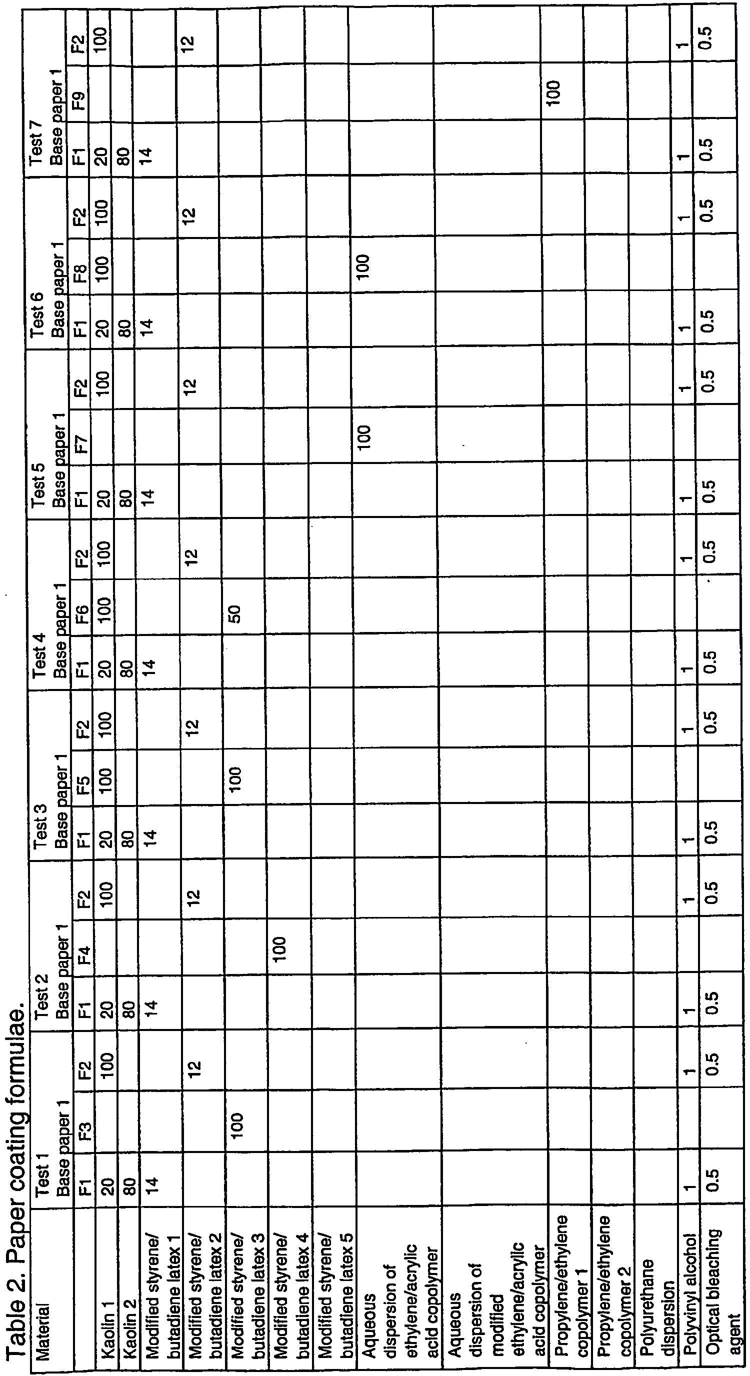

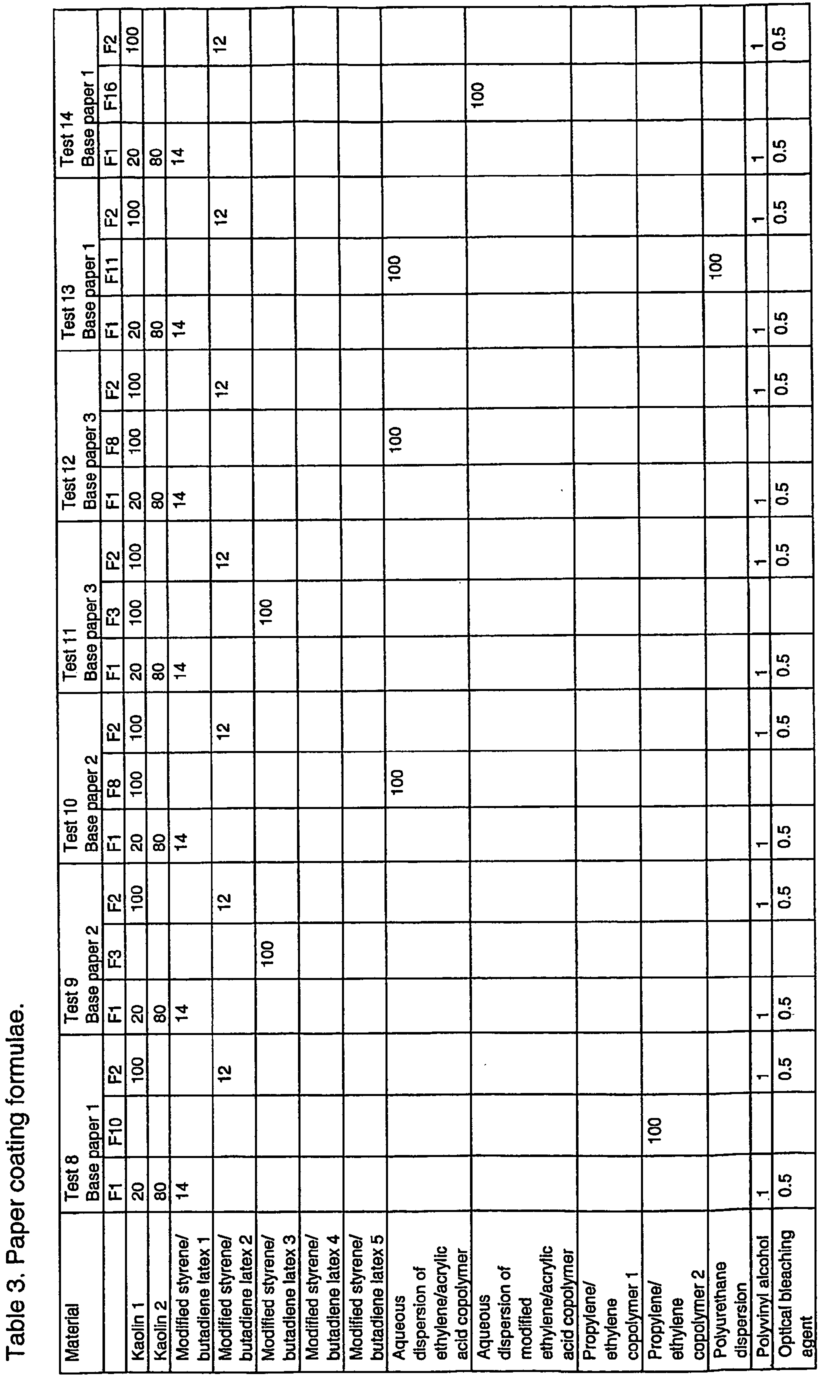

## Claims

1. A method for manufacturing paper by using a base paper with a first side and a second side, **characterized in that** the method comprises:
- treating at least the first side of the base paper with an MG cylinder and/or a calender to a roughness level of Bendtsen roughness from 30 to 500 ml/min, and
-providing the first side of the base paper with a barrier layer by a contactless method so that the water vapour permeability of the paper is not greater than 10 g/m²/24h.

2. The method according to claim 1, **characterized in that** the base paper is curtain coated.

3. The method according to claim 2, **characterized in that** in addition to the barrier layer, a layer comprising mineral particles and adhesive is formed on one or both sides of the barrier layer in a single coating procedure.

4. The method according to any of the preceding claims, **characterized in that** the coated paper is calendered.

## Patentansprüche

1. Verfahren zur Herstellung von Papier durch Verwendung eines Rohpapiers mit einer ersten Seite und einer zweiten Seite, **dadurch gekennzeichnet, dass** das Verfahren Folgendes umfasst:
- Bearbeiten mindestens der ersten Seite des Rohpapiers mit einem MG-Zylinder und/oder einem Kalander auf einen Rauheitsgrad der Bendtsen-Rauigkeit von 30 bis 500 ml/min, und
- Versehen der ersten Seite des Rohpapiers mit einer Sperrschicht durch ein berührungsloses Verfahren, so dass die Wasserdampfdurchlässigkeit des Papiers nicht größer als 10 g/m²/24 h ist.

2. Verfahren nach Anspruch 1, **dadurch gekennzeichnet, dass** das Rohpapier vorhangbeschichtet wird.

3. Verfahren nach Anspruch 2, **dadurch gekennzeichnet, dass** zusätzlich zur Sperrschicht, eine Schicht, die Mineralpartikel und Klebstoff umfasst, auf einer oder beiden Seiten der Sperrschicht in einem Beschichtungsvorgang gebildet wird.

4. Verfahren nach einem der vorhergehenden Ansprüche, **dadurch gekennzeichnet, dass** das beschichtete Papier kalandriert wird.

## Revendications

1. Procédé de fabrication de papier en utilisant un papier de base présentant un premier côté et un second côté, **caractérisé en ce que** le procédé comprend :
- traiter au moins le premier côté du papier de base au moyen d'un sécheur frictionneur et/ou d'une calandre pour obtenir un niveau de rugosité, exprimé en rugosité Bendtsen, compris entre 30 ml/min et 500 ml/min et
- doter le premier côté du papier de base d'un couche barrière grâce à une méthode sans contact de manière à ce que la perméabilité à la vapeur d'eau du papier ne dépasse pas 10 g/m²/24h.

2. Procédé selon la revendication 1, **caractérisé en ce que** le papier de base est couché par voile.

3. Procédé selon la revendication 2, **caractérisé en ce qu'**en plus de la couche barrière, une couche comprenant des particules minérales et un adhésif est formée sur un côté ou les deux côtés de la couche barrière en une seule opération de couchage.

4. Procédé selon l'une quelconque des revendications précédentes, **caractérisé en ce que** le papier couché est calandré.
